# EUROPEAN PATENT APPLICATION

(11) **EP 3 878 525 A1**
(43) Date of publication of application: **15.09.2021**
(21) Application number: 21161268.4
(22) Date of filing: 08.03.2021
(51) Int. Cl.: A63B 21/005, A63B 22/00, A63B 22/02, A63B 22/06, A63B 24/00, A63B 71/06, A63B 71/00

(54) **SYSTEMS AND DEVICES FOR CONTROLLING FITNESS MACHINES**

(30) Priority: 10.03.2020 US 202062987585 P; 26.02.2021 US 202117186841
(71) Applicant: Life Fitness, LLC, Rosemont, IL 60018 (US)
(72) Inventor: Arceta, Radmond V., Libertyville, Illinois 60048 (US); Danek, Kari, Chicago, Illinois 60641 (US)
(74) Representative: Håmsø Patentbyrå AS

(57) **Abstract**

A fitness machine providing solid-state controls. The fitness machine includes a frame and a moving portion supported by the frame that moves relative to the frame. An adjustment device adjusts the movement of the moving portion. A console has a display for displaying information when the fitness machine is in use. An input device receives a user input movement for controlling the adjustment device. The input device includes a contact surface that detects a direction of the user input movement thereon, and the input device includes a movement simulating indicator that generates a display. A control system is coupled to the input device and the adjustment device. The control system controls the adjustment device based on the direction of the user input movement received by the input device. The control system causes the display of the movement simulating indicator to move in the direction of the user input movement.

## Description

### CROSS REFERENCE TO RELATED APPLICATION

This application claims the benefit of U.S. Provisional Patent Application No. 62/987,585, filed March 10, 2020, which is incorporated herein by reference in its entirety.

### FIELD

The present disclosure generally relates to fitness machines incorporating static input devices, and more particularly to fitness machines incorporating static input devices that provide feedback to simulate movement thereof.

### BACKGROUND

The following U.S. Patents and Patent Publication provide background information and are incorporated by reference in entirety.

U.S. Patent No. 6,572,512 discloses an exercise treadmill that includes various features to enhance user operation and to reduce maintenance costs. These features include handlebars with an upwardly curved center section and outwardly flared side portions along with pivoting rear legs for the treadmill frame. The control panel features include snap-in user trays and an overlay covering the numerical keypad along with an auxiliary control panel having a subset of user controls that are larger and more easy to use than the same controls on the main control panel. Maintenance enhancing features include the provision for access panels in the treadmill housing and a belt lubrication system that uses a priming pulse to clear the wax spraying nozzle along with using treadmill operating criteria for scheduling and operating the lubrication system. For injection molded parts such as the control panel, structural strength is enhanced by utilizing gas-assist injection molding to form structural ribs. Another feature includes pre-glazing the treadmill belt. Sound and vibration are reduced in a treadmill by mounting the treadmill belt drive motor on motor isolation mounts that include resilient members. A further feature is a double sided waxed deck where one side of the deck is covered by a protective tape.

U.S. Patent No. 7,846,070 discloses a microprocessor based exercise treadmill control system that includes various features to enhance user operation. These features include programs operative to: permit a set of user controls to cause the treadmill to initially operate at predetermined speeds; permit the user to design custom workouts; permit the user to switch between workout programs while the treadmill is in operation; and perform an automatic cooldown program where the duration of the cooldown is a function of the duration of the workout or the user's heart rate. The features also include a stop program responsive to a detector for automatically stopping the treadmill when a user is no longer on the treadmill and a frame tag module attached to the treadmill frame having a non-volatile memory for storing treadmill configuration, and operational and maintenance data. Another included feature is the ability to display the amount of time a user spends in a heart rate zone.

U.S. Patent No. 9,238,158 discloses a stair climber apparatus with a frame and a plurality of stairs that are pivotably connected together in series and travel in a loop with respect to the frame. The plurality of stairs comprises a first stair having a tread and a riser. The tread and riser are pivotably connected together at a first pivot axis. The tread has a tread surface that supports an operator's foot. A stopping member is on the tread. The stopping member has a stop surface that extends transversely to and upwardly from the tread surface and prevents the operator's foot from overshooting the first pivot axis and engaging the riser as the operator steps onto the tread surface when the riser is pivoted away from the tread.

U.S. Patent No. 9,646,781 discloses a push button encoder that comprises a push button, a base that supports the push button, and a printed circuit board. Pushing the push button engages the printed circuit board and thereby causes the printed circuit board to output an electrical signal. A spring resiliently supports the printed circuit board with respect to the base such that the printed circuit board is movable with respect to the base when the push button is pushed.

U.S. Patent Application Publication No. 2008/0242511 discloses user interface methods and apparatuses for controlling exercise apparatuses. An example user interface includes an exercise parameter input and an indicator associated with the exercise parameter input, and a control unit to activate the indicator in response to a training routine to prompt a user of the exercise apparatus to adjust an operation of the exercise apparatus via the exercise parameter input.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

One embodiment of the present disclosure generally relates to a fitness machine providing solid-state controls. The fitness machine includes a frame and a moving portion supported by the frame that moves relative to the frame when the fitness machine is in use. An adjustment device is configured to adjust the movement of the moving portion relative to the frame. A console has a display for displaying information when the fitness machine is in use. An input device separate from the display of the console is configured to receive a user input movement for controlling the adjustment device, where the input device includes a contact surface configured to detect a direction of the user input movement thereon, and where the input device includes a movement simulating indicator that generates a display. A control system is operatively coupled to the input device and the adjustment device, where the control system controls the adjustment device based on the direction of the user input movement received by the input device, and where the control system causes the display of the movement simulating indicator to move in the direction of the user input movement.

Another embodiment generally relates to a method for controlling a fitness machine having a frame and a moving portion that moves relative to the frame, a console, an adjustment device operable to adjust the movement of the moving portion relative to the frame, and an input device configured to receive a user input movement, where the input device has a contact surface and a movement simulating indicator. The method includes positioning the input device separately from the display of the console on the fitness machine and operating the fitness machine such that the moving portion moves in a first configuration. The method includes displaying the information on the console relating to the operation of the fitness machine and detecting a direction and a velocity of a user input movement on the contact surface of the input device. The method includes causing the display of the movement simulating indicator to move in the direction of the user input movement and based on the velocity detected thereof. The method includes controlling the adjustment device according to the user input movement detected by the user input device to adjust the moving portion to move in a second configuration different than the first configuration.

Another embodiment generally relates to a treadmill having a frame configured to support the treadmill on ground. The treadmill includes a belt and a motor that rotates the belt at a speed during operation of the treadmill relative to the frame. An incline device is configured to change an angle of the belt relative to the ground. A console has a display for displaying information when the treadmill is in use. First and second input devices are separate from each other and separate from the display of the console and are configured to receive user input movements for changing the speed of the motor and the angle of the belt, respectively. The first and second input devices each include a contact surface configured to detect a direction and a velocity of the user input movement thereon. Each contact surface has a convex shape and remains static while the direction of the user input movement is detected thereon. Lights are beneath each contact surface and are visible therethrough, where the lights successively activate in the direction of the user input movement as the user input movement is detected on the contact surface and based on the velocity detected thereof. A control system is operatively coupled to the first and second input devices, to the motor, and to the incline device. The control system controls the motor and the incline device based on the first and second user input movement received by the input device, respectively.

Various other features, objects and advantages of the disclosure will be made apparent from the following description taken together with the drawings.

### BRIEF DESCRIPTION OF THE DRAWINGS

The present disclosure is described with reference to the following Figures.
FIG. 1A is an isometric side view of an exemplary fitness machine incorporating systems and input devices according to the present disclosure.
FIG. 1B is a close-up view taken within the box B-B from FIG 1A;
FIG. 2 is a close-up isometric view of another exemplary embodiment of fitness machine incorporating systems and input devices according to the present disclosure;
FIG. 3A is an isometric top view of another embodiment of fitness machine incorporating systems and input devices according to the present disclosure;
FIG. 3B is an isometric side view close up taken within the box C-C from FIG. 3A;
FIG. 4 is an isometric side view of an embodiment of fitness equipment similar to that shown in FIG. 1, but incorporating alternative systems and input devices according to the present disclosure;
FIG. 5A depicts another exemplary fitness machine similar to that shown in FIG. 3A, but incorporating alternative systems and input devices according to the present disclosure;
FIG. 5B is an isometric close up view depicting the input device of FIG 5A;
FIG. 6 is an exemplary control system as may be incorporated within the fitness systems depicted in FIGS. 1A-5B and 7;
FIG. 7 is a close-up isometric view of another exemplary embodiment of fitness machine incorporating systems and input devices according to the present disclosure; and.
FIG. 8 is a flow diagram showing an exemplary method for controlling a fitness machine according to the present disclosure.

### DETAILED DISCLOSURE

The present inventor has identified problems with fitness machines presently known in the art, and particularly input devices used to control the operation of these fitness machines. Among the typical input devices used to control fitness machines in the art are pushbutton switches, sliding switches, selector switches (e.g., rotary knobs or levers having multiple positions), paddles (e.g., limit switches), and/or other switch mechanisms. In the example of a treadmill as the fitness machine, input devices are conventionally used to adjust the speed and/or incline of the belt (such as those within the Life Fitness T5 Treadmill, for example). Other uses of input devices for fitness machines include those for adjusting the resistance, incline, and/or stride length of a rowing device, stair climber, upright or recumbent stationary bicycles, or elliptical machine, for example. However, it should be recognized that these are merely examples and that other features of fitness machines known in the art may also be adjustable by input devices.

The present inventor has recognized that, particularly for fitness machines, input devices tend to break or otherwise fail in the field as a result of high use and/or operation while the user is in motion, such as running. Specifically, input devices known in the art having moving parts and thus have an inherently limited lifespan. This is further exacerbated for input devices of fitness equipment used within a commercial context (e.g., at a fitness center), which are exposed to greater usage and, consequently, wear and tear. Similarly, the inventor has identified that any ingress of water, sweat, and/or dirt causes these moving parts of the input devices (and/or any internal electrical components contained therein) to fail, thereby causing the input devices to malfunction. Replacing these input devices is typically expensive and requires installation by a technician rather than the owner of the fitness machine, adding further expense and longer downtime. Likewise, these input devices may be combined with or imbedded into other components (e.g., a panel of inseparable input devices) such that the failed input device may not be replaced alone. In other words, functioning portions of the non-separable hardware must also be replaced, increasing the cost and complexity of replacing the part.

Through experimentation and development, the present inventor has developed solid-state input devices that solve the problems described above for use within fitness machines. Moreover, the input devices disclosed herein can also enhance the functionality of the fitness equipment over those incorporating input devices presently known in the art. While the present disclosure generally focuses on capacitive-based controls as the solid-state controls, resistive or other non-moving controls may also or alternatively be employed.

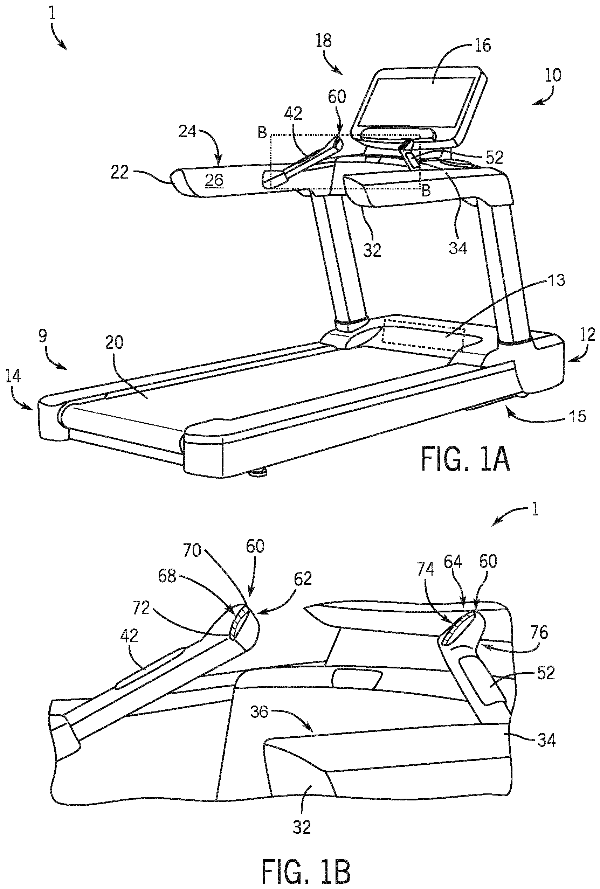

FIGS. 1A and 1B depict a first example of a fitness machine 10 that is similar to those presently known in the art but incorporates one or more input devices 60 in a system 1 according to the present disclosure. In the example shown, the fitness machine 10 is a treadmill with a frame 11 having a front 12 and back 14, as well as a moving portion that moves relative to the frame 11, here a belt 20 that is rotatable by a motor 13 in a conventional manner. The belt 20 is configured for the user to run or walk thereon as the belt 20 moves relative to the frame 11.

The rotational speed of the belt 20 is adjustable by varying the speed of the motor 13. In certain treadmills commonly referred to as "sled" treadmills, the belt 20 is rotated by a force exerted by the user, rather than being rotated by a motor 13. In this case, a motor 13 or other resistance device may be provided that adjustably resists the user's rotation of the belt 20. Additional information regarding this sled type of treadmill can be found in U.S. Patent No. 10,238,911. The incline of the belt 20 is also adjustable relative to the floor in a manner known in the art, for example via an actuator 15 positioned near the front 12 of the frame 11. An exemplary actuator for adjusting the incline angle of the treadmill is the Treadmill incline motor lift actuator model 0K65-01192-0002 / CMC-778, produced by P-Tech USA. Devices that modify the way the fitness machine 10 operates, such as the changes in speed or angle of the moving portion via the motor 13 and actuator 15 discussed above, including the manner are also referred to herein as "adjustment devices". Additional information about treadmills generally is provided in U.S. Patent No. 6,572,512, which is incorporated herein by reference.

The fitness machine 10 of FIGS. 1A and 1B further includes a console 16 having a display 18, which may also be configured in a conventional manner. For example, the display 18 may provide selections of exercise programs for the user to complete, such as directing the user to run at a certain speed and/or incline for certain intervals of time and/or varying in a certain sequence of intensities. The exercise program may automatically adjust various operations of the fitness machine, such as the speed and incline in the example above, based on the user's progress in completing the exercise program. However, as is discussed further below, the fitness machine 10 typically remains controllable by separate input devices 60 (distinct from the console 16), to adjust operations of the fitness machine 10 without running an exercise program, and/or to manually adjust the fitness machine 10 as desired.

The fitness machine 10 of FIGS. 1A and 1B includes left and right arms 22, 32 each having a top surface 24, 34 and inner surface 26, 36. The arms 22, 32 can be used to provide to the user stability before, after, or during use of the fitness machine 10. In the embodiment of fitness machine 10 shown, left and right handles 42, 52 are also provided, which also provide the user stability in a similar manner. Fitness machines presently known in the art may incorporate input devices for controlling operations of the fitness machine 10 on the left and/or right arms 22, 32 and/or the left or right handles 42, 52 as a convenient location for the user.

In contrast to fitness machines known in the art, the fitness machine 10 of FIGS. 1A and 1B incorporates input devices 60 that operate in a non-moving manner (i.e., the input devices 60 are solid state). The input devices 60 are positioned on the left and right handles 42, 52 in a location convenient to the user while using the fitness machine 10. However, as is discussed further below, these input devices 60 may also or alternatively be positioned elsewhere on the fitness machine 10. In the example shown, the input devices 60 include an incline control 62 and speed control 64, which may be capacitive-based input devices. Additional information regarding solid-state input devices known in other fields of art may be found in U.S Patent Nos. 8,487,788; 9,069,411; 9,948,297; and 10,338,739, for example.

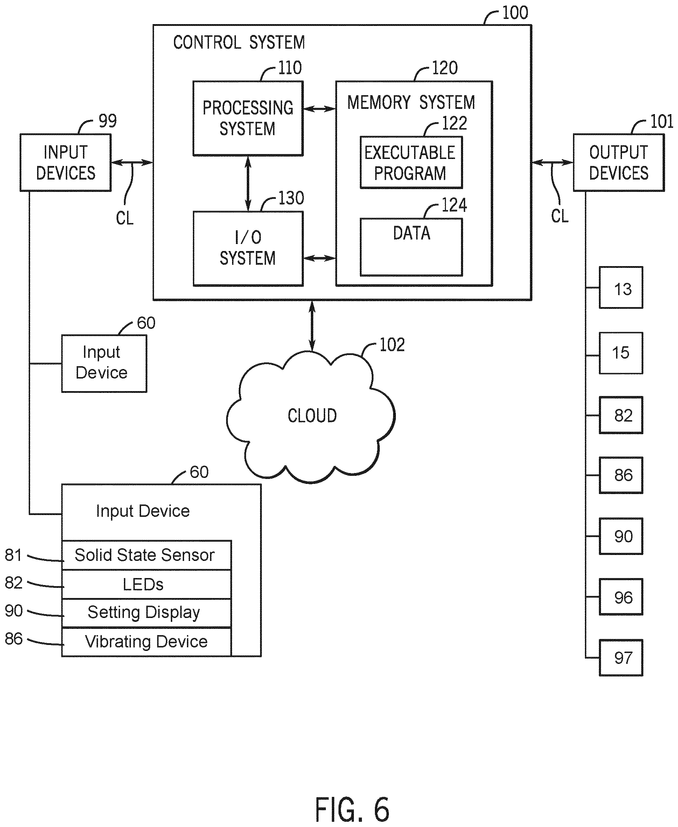

With continued reference to FIGS. 1A and 1B, the input devices 60 each have contact surfaces 68 that extend between a first end 70 and a second end 72, here having a convex shape therebetween. In this manner, the contact surfaces 68 of the input devices 60 resemble the top portion of a scroll wheel, such as a scroll wheel for a computer mouse, for example. However, the contact surfaces 68 of the presently disclosed input devices 60 do not physically move relative to the left or right handles 42, 52 on which the input devices 60 are mounted. Instead, the input devices 60 incorporate one or more solid-state sensors such as those described in the patents referenced above or as otherwise known in other fields of art. In particular, the input devices 60 are configured to use one or more of these solid-state sensors 81 (FIG. 6) to detect contact by the user on the contact surface 68, which as described below can be advantageously applied within the context of fitness machines 10.

In certain embodiments, the input device 60 includes five capacitive touch sensors as the solid-state sensors 81 arranged in a line below the contact surface 68 so as to detect a single contact or swiping across multiple sensors. An exemplary capacitive touch sensors includes Adafruit model 1375 Touch Sensor. Another exemplary solid-state sensor 81 for use within the input devices 60 presently disclosed is the Atmel ® AT11805 Capacitive Touch Long Slider Design with PTC. However, it should be recognized that other capacitive or resistive touch sensors, aligned linearly or in other configurations as presently known in the art, may also or alternatively be used.

Here, the convex shape of the contact surface 68 provides a visual and tactile reference by which the user may identify the input device 60 without requiring directly looking, also allowing the user to judge where between the first end 70 and second end 72 the user is presently contacting the input device 60. Likewise, the lack of motion enables the user to quickly change settings via the input devices 60. The inventor has recognized that this functionality may be especially important for supporting high intensity interval training (also referred to as H.I.I.T.) in which fitness machine 10 controls are changed significantly and frequently.

In this manner, the user's engagement with the input devices 60, and the underlying function of the input devices 60 in communicating with the fitness machine 10 to effectuate adjustments, are advantageous compared to scroll wheels presently known in the art. Instead of the user's finger remaining fixed relative to the contact surface 68 as the surface moves relative to the left or right handles 42, 52, (as in a conventional scroll wheel), the user's finger slides across the stationary contact surface 68. The input device 60 detects this motion and sends out an electrical signal accordingly. This electric signal is received by the control system 100 (discussed below), which changes the operation of one or more functions of the fitness machine 10 in the same manner as an electrical signal received from a conventional, moving, traditional input device.

It should be recognized that the contact surfaces 68 need not be convex as shown to function in the manner described above. However, the inventor has identified that by shaping the contact surface 68 of the input device 60 to visually resemble a conventional scroll wheel known in the art, the user is more quickly able to adapt to using the input device 60.

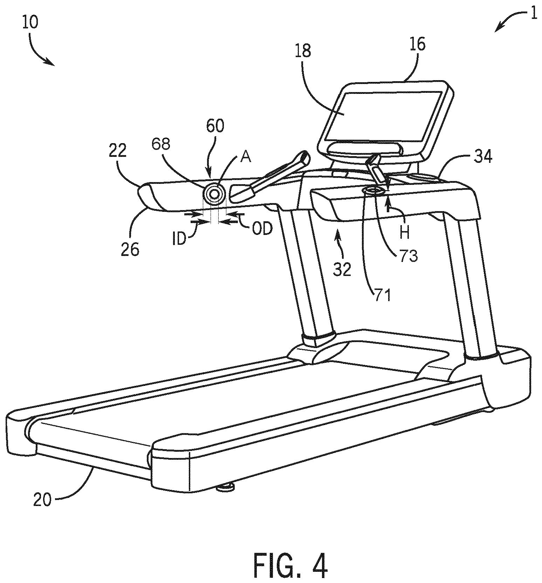

It should also be recognized that the shape of the contact surface 68 can also vary other than in the height direction as in the case of a convex shape. By way of non-limiting example, the contact surfaces 68 of input devices 60 may extend along a path between first and second ends 70, 72 having bends, curves, or continuous shapes such as circles or ellipses. For example, the contact surfaces 68 of the input devices 60 shown in FIG. 4 are shaped as an annular ring having an inner diameter ID, outer diameter OD, and height H, as discussed further below.

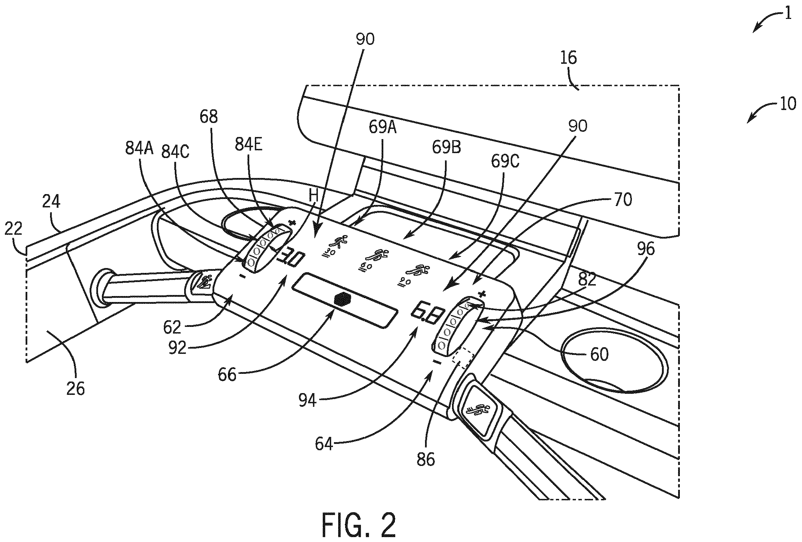

FIG. 2 depicts an embodiment of input device 60 similar to that of FIGS. 1A and 1B and used to control various functions of the fitness machine 10. The input devices 60 are provided in front of and below the console 16, rather than on the left and right handles 42, 52. Each of the input devices 60 of FIG. 2 is a back-tinted, sealed panel having a contact surface 68 with a convex shape that rises to a height H above the lowest points at the first end 70 and an opposite second end 72 (FIG. 1A). In the current example, the lowest point for the contact surface 68 is at the first end 70 and the second end 72, which in the present case both have a height H of zero. However, in other examples the height H at the first end 70 and/or second end 72 may be non-zero, which can increase the visual and/or tactile distinction of the entire input device 60 over the fitness machine 10. The present disclosure also anticipates other configurations of heights H at and between the first end 70 and second end 72, as discussed further below.

In addition to the contact surface 68 of the input devices 60 resembling a portion of a scroll wheel, the input devices 60 of FIG. 2 are configured to simulate motion when a user is detected to be contacting the contact surface 68. This simulated motion provides valuable feedback to the user that the input device 60 is indeed detecting inputs from the user. The inventor has recognized that while this feedback would have been inherent in a moving input device, this valuable function is lost when changing to a solid-state input device.

For the input devices of FIG. 2, the input devices 60 simulate the motion of a spinning wheel when the contact surface 68 is swiped by the user - though notably without the disadvantages of moving parts and crevices. In particular, the input devices 60 of FIG. 2 include a feedback device that indicates movement, which in the present example is a series of LEDs 82. In this example, the contact surface 68 is made of a translucent material such that the LEDs 82 are visible to the user when on. For clarity, LEDs 82 are not expressly shown in all figures, but shown in FIG. 2. However, it should be recognized that LEDs 82 or other light emitters may also be incorporated within the other input devices 60 depicted in any of the figures, or otherwise discussed throughout the present disclosure. The input devices 60 of FIG. 2 include multiple distinct LEDs 82 as shown, here with labels for a first LED 84a, third LED 84c, and fifth LED 84e (with additional LEDs 82 therebetween). By proving separate LEDs 82, movement of the input device 60 is simulated by selectively illuminating and turning off the LEDs 82 such that the input device 60 appears to be scrolling upwardly, or downwardly, as the case may be. For example, the first LED 84a may first illuminate, then turn off as the next LED 82 illuminates, and so on, specifically with the LEDs 82 turning on in sequence according to the direction of the user's movement. In other words, the LEDs 82 simulate movement by appearing as if the contact surface 68 has a single LED 82 that is moving as the contact surface 68 moves (albeit without the contact surface 68 actually moving).

In certain examples, the movement of the LED's 82 turning on and/or off is also speed sensitive, meaning that the velocity in which the user is detected to be scrolling across the contact surface 68 corresponds to the velocity in which the LEDs 82 turn on and off in sequence to indicate movement of the input device 60. In certain examples, the detected velocity of the user scrolling is equal to the simulated velocity of the LEDs 82 appearing to move (in other words, the faster the user moves, the faster the movement indicated by the LEDs 82).

In certain embodiments, the speed of the user's input also subsequently impacts the speed by which the underlying operation of fitness machine 10 is adjusted. For example, the user scrolling at a first, slow rate may adjust the setting for the speed control 64 to increase at a rate of the belt 20 moving by 0.1 mph per 0.25 inches of scrolling on the contact surface 68. In contrast, scrolling at a second, faster rate may adjust the speed of the belt 20 at a rate of 0.5 mph, 1.0mph, or other increments for the same 0.25 inches of scrolling by the user (whereby the user scrolls that 0.25 inches in less time than the first, slow rate). By way of non-limiting example, the first rate could be 0.25 inches / second, with the second rate being 1 inch / second. However, these rates may be set to different values, may be adjustable based on user sensitivity settings (e.g., changeable via the console 16), and/or may vary based on the underlying function being controlled, for example. For example, the speed of the belt 20 changing for a given detected user movement sped may vary from the speed of changing the incline of the fitness machine 10 for the same user movement speed as detected by the input device 60.

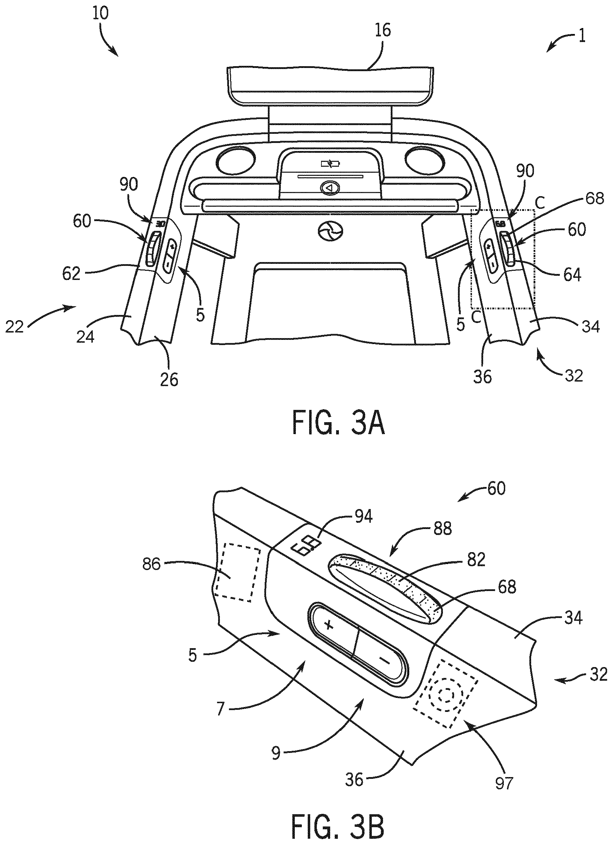

With continued reference to FIG. 2, additional feedback devices may also be configured to function with the input device 60, such as a vibratory device 86. The vibratory device 86 provides haptic feedback that user movement is being detected by the input device 60. For example, the haptic feedback may be configured to simulate the feeling of scrolling a physical scroll wheel, which may be in addition to or alternatively to other feedback devices such as LEDs 82. The vibratory device 86 may be of the type incorporated within smartphones, smartwatches, or video game controllers (e.g., a Sony® PlayStation ® PS5 Dual Sense video game controller), for example. Passive features may also be incorporated to provide feedback to the user of their movement along the contact surface 68 of the input device 60, for example as shown in in FIG. 3B as texture 88 on the contact surface 68. Example of textures 88 include extrusions, grooves, or dimpling of the contact surface 68, for example. In this manner, the texture 88 of the contact surface 68 may feel to the user like sandpaper, and/or other surface variations such that the user may discern movement thereon.

Returning to FIG 2., the fitness machine 10 is shown having multiple input devices 60, here an incline control 62, speed control 64, and a stop control 66, each of which in the present case is solid-state and detects movement through capacitive-based operation. In the case of the incline control 62 and speed control 64, a setting display 90 is also provided in close proximity to each input device 60, which in the present case is an incline selection 92 and a speed selection 94 for operating the fitness machine 10. The setting display 90 may be an LED display or another type of display conventionally known in the art. It should be recognized that the setting display 9 may also or alternatively be incorporated within the input device 60 itself, including being visible through the contact surface 68. The incline selection 92 may be configured to indicate that a present incline level of the belt 20 being three degrees (or another measure of grade), and the speed selection 94 corresponded to the motor 13 rotating the belt 20 at 6.8 miles per hour, for example. When the user provides inputs via one of the input devices 60, the corresponding setting display 90 may temporarily display a new value selection adjustable by the input device 60, rather than the present state of the fitness machine 10. In other words, the setting display 90 may show the user what they are currently selecting, rather than how the fitness machine 10 is currently set. In certain configurations, the control system 100 (discussed further below) waits to adjust the fitness machine 10 to this newly selected setting until no new motion (and/or no contact by the user) is detected by the corresponding input device 60 for a given duration, for example 2-3 seconds.

With continued reference to FIG. 2, an input indicator 96 may also be provided within or near (e.g., as a separate LED) the input device 160 and/or setting device 90. The input indicator 96 indicates when changes are being actively made via the corresponding input device 60. The input indicator 96 may be a separate light (e.g., an LED), or be provided by changing the appearance of the setting display 90 or contact surface 68, as the case may be, relative to when no changes are being made by the input device 60. For example, the text, numbers, symbols, or other content being displayed or shown within a setting display 90 may be shown in a different color, size, brightness, or style to also function as an input indicator 96 while changes are being made via the input device 60. Similar changes may also or alternatively be made to the contact surface 68 of the input device 60, for example by varying the color or brightness of LEDs 82 therein while changes are being made by the user. Whether separate or integrated into the setting display 90 and/or input device 60, the input indicator 96 functions to signify to the user that user movement is detected on the input device 60. In certain examples, the standard appearance of the setting display 90 and/or input device 60 return after no user contact and/or movement are detected for a certain period of time, for example 1 or 2 seconds.

In further examples, the setting display 90 and/or input device 60 may have a different appearance to signify when the input device 60 is being used to make selections in different modes. For example, the same input device 60 may be used to make selections (e.g., to a speed of the motor 13) in a coarse selection mode (for example with the LEDs 82 showing in red), versus a fine-tune mode (for example with the LEDs 82 shown in orange). Coarse selection mode may correspond to increasing the speed of the belt 20 by increments of 1.0 mph, with fine-tune mode increasing by increments of 0.1 mph, for example. In certain configurations, the input device 60 is by default in a fine-tuning mode but is switched to coarse mode if the user pauses after first contact with the contact surface 68 before moving again (for example, waiting 1 second after contacting the contact surface 68 to move again). In other configurations, the input device 60 is first in a coarse mode, but automatically switches to fine-tuning mode after the user makes a first (coarse) selection, discontinues contact with the contact surface 68, and then re-contacts the contact surface 68 within a short period of time, for example, returning to the contact surface 68 within 1 second, for example. In another example, a quick tap or touch detected on the contact surface 68 (e.g., less than 0.3 second or sustained contact) alternates between activating coarse and fine selection modes, whereas swiping or moving contact provides selections (according to the activated mode) as described above.

In another example, the input indicator 96 (whether incorporated in the setting display 90 or the contact surface 68 of the input device 60) is shown in a first color, font, or style while motion is detected on the input device 60 (e.g., shown as first color), and changes when the user is no longer providing selection via the input device 60. This indicates that the selection has been made and the fitness machine 10 will adjust according to the setting received by the input device 60. It should be recognized that this may be combined with differing colors, fonts, or styles to indicate coarse versus fine-tuning modes as well.

The embodiment of FIG. 2 also incorporates a series of quick selection controls 69A-69C, which may be programmed to correspond to popular predetermined settings (e.g., 3.0 mph, 5.0 mph, and 7.0 mph speeds, for example). These offer the user quick selection choices as an alternative to using the input devices 60, and/or as an initial coarse selection by which the input devices 60 may then use used to increase or decrease the selection further.

FIGS. 3A-3B depict another exemplary fitness machine 10 incorporating the system 1 and input devices 60 disclosed herein. In the example shown, the input devices 60 are provided on the left arm 22 and right arm 32 of the fitness machine 10, and particularly on the top surfaces 24, 34 thereof. In the example shown, the corresponding setting displays 90 are also provided on the top surfaces 24, 34 of the left and right arms 22, 32. The inventor has identified that providing the input devices 60 on the left and right arms 22, 32, as opposed to controlling the corresponding functions only through the console 16, provides for stability for the user during operation. In particular, the user may grip these left and right arms 22, 32 while attempting to make precise controls via the input devices 60.

The fitness machine 10 of FIGS. 3A and 3B also depicts the incorporation of some traditional controls 5 having moving parts, such as an increase button 7 and decrease button 9. In certain embodiments, these traditional controls 5 may be redundant with the input devices 60. In these configurations, the input devices 60 may be configured to provide for either fine or coarse selection, with the traditional controls 5 providing the opposite, for example. While the traditional controls 5 may be subject to the same limitations and/or risks provided above with respect to input devices presently known in the art, a combined approach as shown in FIGS. 3A and 3B may at least reduce the amount of wear and tear on the traditional controls 5. For example, the input devices 60 may be positioned in the more precarious location of being on the top surfaces 24, 34 of the left and right arms 22, 32, reducing the exposure risk for the traditional controls 5. Traditional controls 5 may also be limited to less-frequently used controls, thereby not having to endure the same levels of use.

FIG. 4 depicts another embodiment of input device 60 incorporated within a fitness machine 10. The input devices 60 shown have a continuous shape, here annular rings resembling horizontally oriented scroll wheels having an inner diameter ID and outer diameter OD, which extend away from the fitness machine to a height H. In the example shown, the input devices 60 are an incline control 62 provided on the inner surface 26 of the left arm 22, with a speed control 64 is provided on the top surface 34 of the right arm 32. However, the input devices 60 may be positioned in other locations as well. The circular configuration of the input devices 60 allow for the user to provide continuous adjustments without having to lift and replace their finger, providing for faster selection or selections over a broader range of values. This may be particularly advantageous in the context of fine-tuning (which may have a broader range of selections available), or configurations in which lifting the finger off the contact surface 68 causes different mode selections or the like (for example, switching between coarse and fine-tuning modes). The input device 60 also includes feedback devices, particularly the LEDs 82 previously shown in FIG. 2 and described above. Additional feedback may also be provided by a vibratory device 86 or texture 88 on the contact surface 68 of the input device 60 (FIG. 3B), and/or audible sounds from a speaker 97, such as a clicking sound.

In certain examples, contacting an outer surface 71 of the contact surface 68 of the input device 60 of FIG. 4 (between the outer diameter OD and the apex A at height H) performs a first function, such as coarse selection, whereas an inner surface 73 (between the inner diameter ID and the apex A at height H) performs another function, such as fine selection. The two functions could alternatively correspond to different selections, such as belt 20 speed for the outer surface 71 and treadmill incline for the inner surface 73, for example.

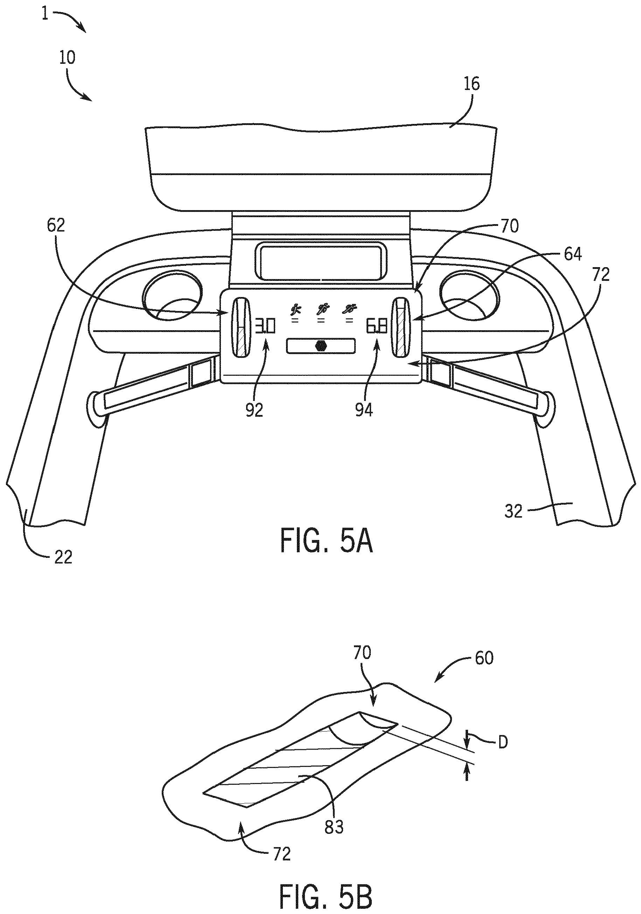

FIGS. 5A and 5B depict another embodiment of system 1 according to the present disclosure. In the embodiment shown, the input devices 60 are concave shaped, in contrast to the convex devices shown in FIG. 2. The input devices 60 extend between a first end 70 and second end 72 like the convex examples previously described but are now recessed to a depth D (inwardly or into the fitness machine 10 where the input device 60 is mounted). This concave shape too provides the user with non-visual positioning feedback, whereby they may feel a trough-like characteristic to the input device 60 to easily determine where the first end 70 and second end 72 start and end. In the example shown, the input device 60 also includes a feedback device, which in the present embodiment is a bar display 83 such that the feedback device appears to fill or empty in accordance with the user's selection. In other words, the solid-filled display 83 indicates a selection level in a similar manner to an analog thermometer with a rising liquid level with "full" corresponding to the bar display 83 extending all the way up to the first end 70. It should be recognized that while the input devices 60 are shown to be below the console 16, the input device 60 may be provided in other positions on the fitness machine 10. The bar display 83 may be comprised of multiple individual LEDs 82, and in some examples includes a diffuser such that the individual LEDs 82 appear as a single light source.

It should be recognized that multiple different embodiments of the input devices 60 presently disclosed herein may be incorporated within the same fitness machine, such as one of the input devices 60 of FIG. 4 and one of the input devices 60 of FIG. 5A, for example.

It should also be recognized that the presently disclosed input devices 60 may be used to control non-movement controls, such as scrolling on the display 16 of the console 18 to select an exercise program, select the user's age or weight, select a music station or movie for viewing, and/or the like. Additionally or alternatively, the presently disclosed input devices 60 may be configured to detect a single point on the contact surface 68 (in certain example, relative to a previously selected point), whereby the "movement" is denoted by the comparison of the selected point versus the previous selection, rather than the user moving along the contact surface 68 while maintaining contact therewith. For example, a previous position on the contact surface 68 selected may be at the midpoint thereof, whereas the newly selected point is 80% of the way to the top. This may be interpreted as a movement from 50-80% as if the user had swiped from the midpoint to 80%, for example.

Below are some additional features that may be incorporated alone or in combination in various embodiments of fitness machines and controls thereof according to the present disclosure. With regard to the geometry or shape of input devices, the physical shape of the surface in certain embodiments mimic traditional control actuators, like dials, wheels, knobs, and/or buttons, as discussed above. There may also be multiple surfaces or multiple partitions on a single surface. For example, a raised wheel might have the flat, parallel disk-shaped surfaces in addition to the circumferential band-shaped surface. The different surfaces in certain examples offer different types of control (e.g., fine vs coarse, different actuators, different selection criteria). The size of the contact patch from the user might also be used to indicate different types of control (e.g., palm contact vs fingertip contact), such as provided by the Smart Home Control 3-Switch Panel by Brilliant.

The physical shape of the surface could provide additional benefits. For example, the surface may include bumps, ridges, and/or knurling on the circumference of a dial or wheel that provide tactile haptic feedback to the user as the finger is moved over the surface, which may be used with or without vibration-based haptic feedback.

In certain embodiments, the surface is capacitive-based (also referred to as being a "touch" sensed device), in addition to having membrane switches under the surface. This allows for two types of activation in the same control. Additionally or alternatively, the input device 60 may utilize different intensity pressures for different control. For example, the system may be configured such that a touch/swipe performs one control, whereas a pinch or click performs another, all on the same surface (for example as provided on mainstream smart phones, such as the Apple® iPhone® 12.

In terms of environment, the presently disclosed devices and systems provide advantages over traditional mechanical dials and switches with respect to liquid ingress and dirt/dust contamination. This is provided a sealed surface area, making the devices ideal for use on treadmills, cross trainers, bikes, Arc trainers, etc.

Various types of feedback may be incorporated into the systems or devices disclosed herein, as discussed above. Exemplary feedback includes internal lights that can mimic motion of the dial, and/or haptic, audible, or visual tie ins. The devices and systems of certain embodiments are further able to be personalization based on preferences - color, brightness, sound options, intensity of haptic feedback. In certain examples, the color of the LEDs 82 indicate a current state for the input device (e.g., active or sleep, speed of motion, sensitivity setting, selected menu, feature being controlled, whether the setting is considered "fast" versus "slow, or "high" versus "low", for example, based on comparisons to thresholds). Color and/or brightness may also be used to indicate if the controller is engaged or disengaged, for example.

The system 1 may also incorporate protective features to prevent unintended activations of the input device 60. For example, the system 1 (in some cases via the input device 60) may include a process for engaging or disengaging the controls, such as tapping once to engage, whereby subsequent taps or swipes result in use of the input device. These processes may also or alternatively incorporate contact differentiation, such as distinctions in the duration, size, or presence of multiple points of contact simultaneously.

Additional exemplary variations in the controls that may be provided by the input devices 60 presently disclosed are summarized herein. These include the ability to change responsiveness of the input device 60 through settings in the console 16, which is challenging if not impossible to perform with traditional input devices known in the art. Different modes of use for High Performance Runners may be more sensitive for quick speed/incline changes, or may be less sensitive because you have less control when moving fast. Different modes may also be provided for novice users or elderly.

The input device 60 may also be operable based on position control, versus speed control for contacting the surface of the input device. In certain examples, trainers might prefer position control for more predictable outcomes of using the input device. Combinations of position and speed control may also be utilized. Similarly, the presently disclosed input devices and systems incorporating them also provide for flexibility and customization of how the controls are integrated within the exercise and/or programs selected. For example, how the controls are used might be different with the different programs, or within a given program. In a "Quick Start" program mode, a single button may be assigned to just control speed, whereas in a hills workout the same input device may be assigned to control incline, for example. Similarly, in further examples, in an interval workout that changes between sprint and strength (e.g., in group cycle), the sensitivity of the same input device may automatically changes to reflect ability of the user to use the control and the expected accuracy and/or precision associated therewith.

In certain examples, control limits may also be imposed based on the user's capabilities (preprogrammed, and/or as detected by the system 1), for example based on age, heart rate, and/or the like. In other examples, if the input device 60 is configured such that tapping one location (e.g., near the middle between the first end 70 and second end 72) sets the input device 60 to make selections (over the entire length between the first end 70 and second end 72) within one segment of an overall range, such as 6-8 mph for rotating a belt 20, whereas first tapping another location on the input device 60 (e.g., near the second end 72) sets the input device 60 to make selections within another range, such as 1-4 mph, for example.

Similarly, the same input device 60 can be alternated between providing coarse versus fine adjustments, as discussed above. For example, this would enable a first selection of speed by increments of 1 mph, whereby a second selection provides increments by 0.1 mph. In certain examples, the first selection is initiated by first contacting the surface in a first direction (e.g., clockwise), with the second selection initiated by first contacting the surface in an opposite second direction (e.g., counterclockwise). A display or change in status (e.g., light color and/or brightness), may signal to the user whether the first or second selection has been initiated.

In further embodiments, the same input device 60 may also be used for controls other than machine operations such as speed or incline, for example to perform navigation on a console 16 when no program has yet been selected.

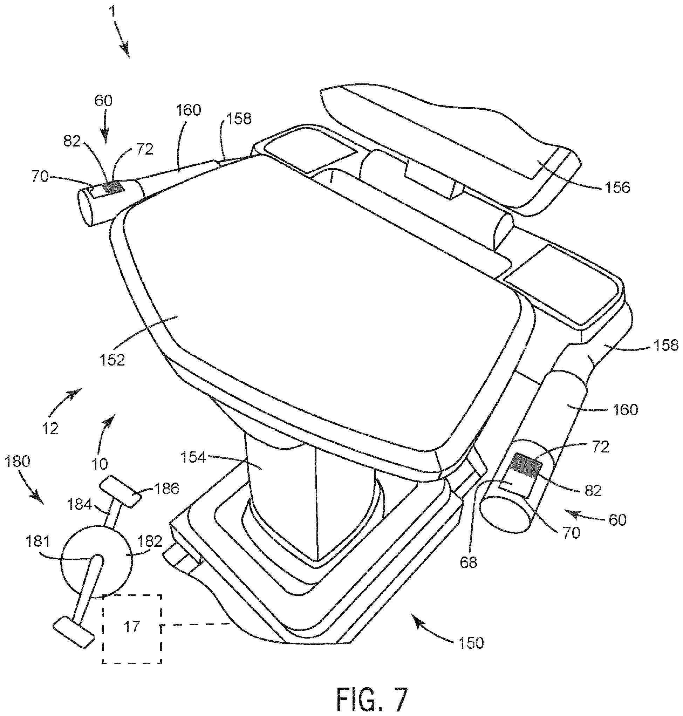

FIG. 7 depicts yet another embodiment of a fitness machine 10 incorporating the systems and methods of the present disclosure. In this example, the fitness machine 10 is a recumbent bicycle having a frame 150 that rests on the floor. The user sits on a seat 152 supported by a pedestal 154 coupled to the frame 150 and leans against a backrest 156 in a manner known in the art. Arms 158 extend forwardly for the user to hold as desired, which also includes a grip 160 for comfort and improved hold. The fitness machine 10 is used in the manner known in the art, whereby the moving portion that moves relative to the frame 150 is a wheel assembly 180. The fitness machine 10 is configured for the user to rotate the wheel assembly 180 by exerting a force on the pedals 186 (e.g., by feet or hands), which are connected via crank arms 184 to the crank 182 of the wheel assembly 180. The wheel assembly 180 rotating about an axle 181 in the manner known in the art.

In the embodiment shown, an input device 60 is provided on each of the arms 158, which in the present case are linear and extend from a first end 70 to a second end 72. In the example shown, LEDs 82 are configured to indicate the selection provided via the input device 60, which in the present case has the appearance of an analog thermometer filling up (e.g., with mercury), but here to the selection level rather than a temperature. In this example, the input device 60 may be configured to control adjustment devices presently known in the art, for example a resistance device 17 as incorporated within a Life Fitness Lifecycle ®, to resist the rotation of the wheel assembly 180 as the user pedals. However, it should be recognized that one of the input devices 60 presently disclosed may replace any traditional control 5 used to control or adjust any resistance device 17 known in the art (e.g. a magnetic resistance eddy current brake mechanism known in the art).

Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other input devices. The connections between functional and logical block components are merely exemplary, which may be direct or indirect, and may follow alternate pathways.

In certain examples, the control system 100 (FIG. 6) communicates with one or more input device 60 and one or more other components of the system 1 via a communication link CL, which can be any wired or wireless link. The control system 100 is capable of receiving information and/or controlling one or more operational characteristics of the system 1 and its various sub-systems by sending and receiving control signals via the communication links CL. In one example, the communication link CL is a controller area network (CAN) bus; however, other types of links could be used. It will be recognized that the extent of connections and the communication links CL may in fact be one or more shared connections, or links, among some or all of the components in the system 1. Moreover, the communication link CL lines are meant only to demonstrate that the various control elements are capable of communicating with one another, and do not represent actual wiring connections between the various elements, nor do they represent the only paths of communication between the elements. Additionally, the system 1 may incorporate various types of communication devices and systems, and thus the illustrated communication links CL may in fact represent various different types of wireless and/or wired data communication systems.

The control system 100 may be a computing system that includes a processing system 110, memory system 120, and input/output (I/O) system 130 for communicating with other devices, such as input devices 99 and output devices 101, either of which may also or alternatively be stored in a cloud 102. Exemplary input devices 99 include the input devices 60 disclosed herein for adjusting operations of the fitness machine 10, including solid-state sensors 81 incorporated therein in accordance with the patents referenced above or other solid-state sensors known in other fields of art. Exemplary output devices 101 a motor 13, incline actuator 15, or resistance device 17, or the LEDs, setting display 90, vibratory device 86, and/or speaker 97 associated with an input device 60 to provide feedback to the user. The processing system 110 loads and executes an executable program 122 from the memory system 120, accesses data 124 stored within the memory system 120, and directs the system 1 to operate as described in further detail below.

The processing system 110 may be implemented as a single microprocessor or other circuitry, or be distributed across multiple processing devices or sub-systems that cooperate to execute the executable program 122 from the memory system 120. Non-limiting examples of the processing system include general purpose central processing units, application specific processors, and logic devices.

The memory system 120 may comprise any storage media readable by the processing system 110 and capable of storing the executable program 122 and/or data 124. The memory system 120 may be implemented as a single storage device, or be distributed across multiple storage devices or sub-systems that cooperate to store computer readable instructions, data structures, program modules, or other data. The memory system 120 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

As discussed above, the control system 100 may modify how the inputs received by the input devices 60 adjust the various functions of the fitness machine 10. In certain embodiments, an exercise program selected on the console 16 for execution by the user also impacts the speed by which the adjustment devices adjust various settings of the fitness machine 10. For example, the control system 100 may provide for adjusting the movement of the moving portion (e.g., the belt 20) relative to the frame at a first rate during a first portion of the exercise program, and at a second rate different than the first rate during a second portion of the exercise program. This may correspond to a warm up phase as the first portion, during which user can make adjustments to the speed of the belt 20 via the input device 60 in a coarse correction mode (e.g., to quickly get up to a known, preferred speed), but drop down to a slower, fine-tuning mode later in the exercise program when the user is likely to be fatigued. Other inputs 199 may also be considered, including the heart rate of the user, to provide this adjustment in the speed by which user inputs via the input device 60 adjust the operation of the fitness machine 10, for example.

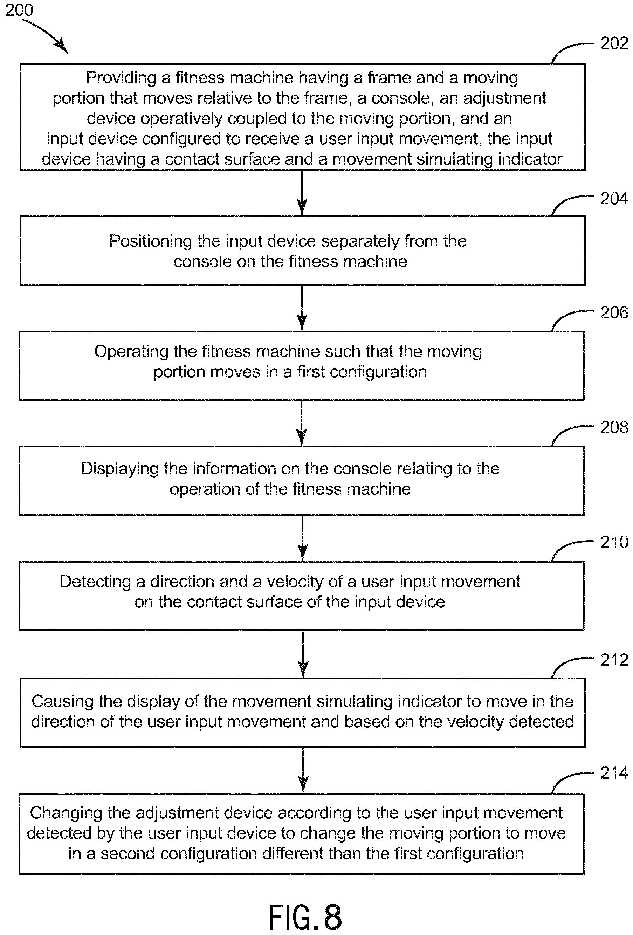

An exemplary method 200 for controlling a fitness machine 10 according to the present disclosure is shown in FIG. 8. In step 202 of the example shown, a fitness machine 10 is provided that has a frame and a moving portion that moves relative to the frame, a console, an adjustment device operatively coupled to the moving portion, and an input device configured to receive a user input movement, the input device having a contact surface and a movement simulating indicator, the method comprising. Step 204 provides for positioning the input device separately from the console on the fitness machine. Step 206 provides for operating the fitness machine such that the moving portion moves in a first configuration, then displaying the information on the console relating to the operation of the fitness machine in step 208. Step 210 provides for detecting a direction and a velocity of a user input movement on the contact surface of the input device, then causing the display of the movement simulating indicator to move in the direction of the user input movement and based on the velocity detected thereof in step 212. Step 214 provides for changing the adjustment device according to the user input movement detected by the user input device to change the moving portion to move in a second configuration different than the first configuration.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. Certain terms have been used for brevity, clarity, and understanding. No unnecessary limitations are to be inferred therefrom beyond the requirement of the prior art because such terms are used for descriptive purposes only and are intended to be broadly construed. The patentable scope of the invention is defined by the claims and may include other examples that occur to those skilled in the art. Such other examples are intended to be within the scope of the claims if they have features or structural elements that do not differ from the literal language of the claims, or if they include equivalent features or structural elements with insubstantial differences from the literal languages of the claims.

The following clauses set out features of the invention which may not be presently claimed but which may form the basis for amendments or future divisional applications.

### CLAUSES

1. A fitness machine providing solid-state controls, the fitness machine comprising:
   a frame;
   a moving portion supported by the frame that moves relative to the frame when the fitness machine is in use;
   an adjustment device configured to adjust the movement of the moving portion relative to the frame;
   a console having a display for displaying information when the fitness machine is in use;
   an input device separate from the display of the console that is configured to receive a user input movement for controlling the adjustment device, wherein the input device includes a contact surface configured to detect a direction of the user input movement thereon, and wherein the input device includes a movement simulating indicator that generates a display; and
   a control system operatively coupled to the input device and the adjustment device, wherein the control system controls the adjustment device based on the direction of the user input movement received by the input device, and wherein the control system causes the display of the movement simulating indicator to move in the direction of the user input movement.
2. The fitness machine according to clause 1, wherein the input device further detects a velocity of the user input movement on the contact surface, and wherein the control system controls the display of the movement simulating indicator and the adjustment device based also on the velocity of the user input movement detected.
3. The fitness machine according to clause 1, wherein the display of the movement simulating indicator includes lights successively activated in the direction of the user input movement.
4. The fitness machine according to clause 1, wherein the adjustment device is also controllable by user console selections received via the console.
5. The fitness machine according to clause 1, wherein the contact surface remains static while detecting the user input movement, wherein the user input movement is a single contact with the contact surface, and when the movement detected is a difference between the single contact and a previous position on the contact surface.
6. The fitness machine according to clause 1, wherein the contact surface has a convex shape that is raised relative to the fitness machine where the input device is positioned.
7. The fitness machine according to clause 1, wherein the contact surface is translucent such that lights of the movement simulating indicator are visible therethrough.
8. The fitness machine according to clause 1, further comprising a selection indicator operatively coupled to the control system, wherein the selection indicator generates a display that changes in conjunction with the control system controlling the adjustment device.
9. The fitness machine according to clause 8, wherein the selection indicator displays a number.
10. The fitness machine according to clause 1, wherein the adjustment device resists the movement of the moving portion.
11. The fitness machine according to clause 1, wherein the input device is also configured to adjust other than the movement of the moving portion relative to the frame.
12. The fitness machine according to clause 1, wherein the direction of the user input movement received by the input device is within a vertical plane.
13. The fitness machine according to clause 12, wherein a user faces in a forward direction when the fitness machine is in use, and wherein the forward direction is parallel to the vertical plane.
14. The fitness machine according to clause 1, wherein the fitness machine operates according to an exercise program, wherein the adjustment device changes the movement of the moving portion based on the user input movement at a first rate during a first portion of the exercise program and at a second rate different than the first rate during a second portion of the exercise program.
15. The fitness machine according to clause 1, wherein the adjustment device is a first adjustment device, wherein the input device is a first input device receiving a first user input movement, the contact surface is a first contact surface, and the movement simulating indicator is a first movement simulating indicator, further comprising:
   a second adjustment device configured to adjust the movement of the moving portion differently than the first adjustment device; and
   a second input device configured to receive a second user input movement for adjusting the movement of the moving portion, wherein the second input device includes a second contact surface configured to detect a direction and a velocity of the second user input movement thereon, wherein the second input device includes a second movement simulating indicator having lights, and wherein the second input device is operatively coupled to the control system;
   wherein the control system controls the second adjustment device based on the second user input movement received by the second input device, and wherein the control system successively activates the lights of the second input device in the direction of the second user input movement and based on the velocity detected thereof.
16. The fitness machine according to clause 15, wherein the fitness machine is a treadmill, wherein the moving portion is a running belt that rotates during use, wherein the first adjustment device changes an incline of the running belt to change the movement of the moving portion, and wherein the second adjustment device changes a speed by which the running belt rotates to change the movement of the moving portion.
17. A method for controlling a fitness machine having a frame and a moving portion that moves relative to the frame, a console, an adjustment device operable to adjust the movement of the moving portion relative to frame, and an input device configured to receive a user input movement, the input device having a contact surface and a movement simulating indicator, the method comprising:
   positioning the input device separately from the display of the console on the fitness machine;
   operating the fitness machine such that the moving portion moves in a first configuration;
   displaying the information on the console relating to the operation of the fitness machine;
   detecting a direction and a velocity of a user input movement on the contact surface of the input device;
   causing the display of the movement simulating indicator to move in the direction of the user input movement and based on the velocity detected thereof; and
   controlling the adjustment device according to the user input movement detected by the user input device to adjust the moving portion to move in a second configuration different than the first configuration.
18. The method according to clause 17, wherein the movement simulating indicator includes lights, and wherein causing the display of the movement simulating indicator to move includes successively activating the lights in the direction of the user input movement and based on the velocity detected thereof.
19. The method according to clause 17, wherein the fitness machine is a treadmill, wherein the contact surface remains static while detecting the user input movement, wherein the contact surface has a convex shape that is raised relative to the fitness machine where the input device is positioned, and wherein the contact surface is translucent such that the lights of the movement simulating indicator are visible therethrough.
20. A treadmill comprising:
   a frame configured to support the treadmill on ground;
   a belt and a motor that rotates the belt at a speed during operation of the treadmill relative to the frame;
   an incline device configured to change an angle of the belt relative to the ground;
   a console having a display for displaying information when the treadmill is in use;
   first and second input devices separate from each other and separate from the display of the console and being configured to receive user input movements for changing the speed of the motor and the angle of the belt, respectively, the first and second input devices each comprising:
   a contact surface configured to detect a direction and a velocity of the user input movement thereon, wherein the contact surface has a convex shape and remains static while the direction of the user input movement is detected thereon;
   lights beneath the contact surface that are visible therethrough, wherein the lights successively activate in the direction of the user input movement as the user input movement is detected on the contact surface and based on the velocity detected thereof; and
   a control system operatively coupled to the first and second input devices, to the motor, and to the incline device, wherein the control system controls the motor and the incline device based on the first and second user input movement received by the input device, respectively.

## Claims

1. A fitness machine providing solid-state controls, the fitness machine comprising:
a frame;
a moving portion supported by the frame that is adapted to move relative to the frame when the fitness machine is in use;
an adjustment device configured to adjust the movement of the moving portion relative to the frame;
a console having a display for displaying information when the fitness machine is in use;
an input device separate from the display of the console that is configured to receive a user input movement for controlling the adjustment device, wherein the input device includes a contact surface configured to detect a direction of the user input movement thereon, and wherein the input device includes a movement simulating indicator that generates a display; and
a control system operatively coupled to the input device and the adjustment device, wherein the control system is adapted to control the adjustment device based on the direction of the user input movement received by the input device, and wherein the control system causes the display of the movement simulating indicator to move in the direction of the user input movement.

2. The fitness machine according to claim 1, wherein the input device further is adapted to detect a velocity of the user input movement on the contact surface, and wherein the control system is adapted to control the display of the movement simulating indicator and the adjustment device based also on the velocity of the user input movement detected.

3. The fitness machine according to claim 1 or 2, wherein the display of the movement simulating indicator includes lights successively activated in the direction of the user input movement.

4. The fitness machine according to any one of the preceding claims, wherein the adjustment device is also controllable by user console selections received via the console.

5. The fitness machine according to any one of the preceding claims, wherein the contact surface remains static while detecting the user input movement, wherein the user input movement is a single contact with the contact surface, and when the movement detected is a difference between the single contact and a previous position on the contact surface.

6. The fitness machine according to any one of the preceding claims, wherein the contact surface has a convex shape that is raised relative to the fitness machine where the input device is positioned.

7. The fitness machine according to any one of the preceding, wherein the contact surface is translucent such that lights of the movement simulating indicator are visible therethrough.

8. The fitness machine according to any one of the preceding claims, further comprising a selection indicator operatively coupled to the control system, wherein the selection indicator is adapted to generate a display that changes in conjunction with the control system controlling the adjustment device, where in the selection indicator preferably is adapted to display a number.

9. The fitness machine according to any one of the preceding claims, wherein the adjustment device is adapted to resist the movement of the moving portion.

10. The fitness machine according to any one of the preceding claims, wherein the input device is also configured to adjust other than the movement of the moving portion relative to the frame.

11. The fitness machine according to any one of the preceding claims, wherein the direction of the user input movement received by the input device is within a vertical plane.

12. The fitness machine according to claim 11, wherein a user faces in a forward direction when the fitness machine is in use, and wherein the forward direction is parallel to the vertical plane.

13. The fitness machine according to any one of the preceding claims, wherein the fitness machine is adapted to operate according to an exercise program, wherein the adjustment device is adapted to change the movement of the moving portion based on the user input movement at a first rate during a first portion of the exercise program and at a second rate different than the first rate during a second portion of the exercise program.

14. The fitness machine according to any one of the preceding claims, wherein the adjustment device is a first adjustment device, wherein the input device is a first input device receiving a first user input movement, the contact surface is a first contact surface, and the movement simulating indicator is a first movement simulating indicator, the fitness machine further comprising:
a second adjustment device configured to adjust the movement of the moving portion differently than the first adjustment device; and
a second input device configured to receive a second user input movement for adjusting the movement of the moving portion, wherein the second input device includes a second contact surface configured to detect a direction and a velocity of the second user input movement thereon, wherein the second input device includes a second movement simulating indicator having lights, and wherein the second input device is operatively coupled to the control system;
wherein the control system is adapted to control the second adjustment device based on the second user input movement received by the second input device, and wherein the control system is adapted to successively activate the lights of the second input device in the direction of the second user input movement and based on the velocity detected thereof.

15. The fitness machine according to claim 14, wherein the fitness machine is a treadmill, wherein the moving portion is a running belt that rotates during use, wherein the first adjustment device is adapted to change an incline of the running belt to change the movement of the moving portion, and wherein the second adjustment device is adapted to change a speed by which the running belt rotates to change the movement of the moving portion.
